# DEMANDE DE BREVET EUROPEEN

(11) **EP 0 656 576 A1**
(43) Date de publication de la demande: **07.06.1995**
(21) Numéro de dépôt: 94402723.4
(22) Date de dépôt: 29.11.1994
(51) Int. Cl.: G06F 1/00

(54) **Dispositif de sécurisation de systèmes d'informations, notamment de systèmes utilisés en micro-informatique**

(30) Priorité: 03.12.1993 FR 9314518
(71) Demandeur: THOMSON-CSF, 75008 Paris (FR)
(72) Inventeur: Guy, Antoine, F-92402 Courbevoie Cedex (FR); Romenteau, Pierre, F-92402 Courbevoie Cedex (FR)
(74) Mandataire: Lincot, Georges

(57) **Abrégé**

Dispositif de sécurisation de systèmes d'informations, notamment d'un système (2) utilisé en micro-informatique comportant au moins un port SCSI, comportant des moyens (5) de chiffrement d'informations confidentielles transitant dans le système d'informations (2), et comportant un périphérique (1), communiquant avec le système d'information (2) par un bus SCSI, comportant une interface (3) entre le bus SCSI et un bus interne au périphérique (1), mettant en communication des moyens de gestion et de stockage d'informations (4) avec les moyens (5) de chiffrement contenus dans le périphérique (1), ainsi qu'avec une interface (6) entre un utilisateur et le périphérique (1), permettant de rendre les services de sécurité sur les informations confidentielles transitant dans le périphérique (1) indépendamment des standards de bus et de système d'exploitation utilisés par le système d'informations (2).

Application : unité logique de chiffrement en micro-informatique.

## Description

La présente invention concerne un dispositif de sécurisation de systèmes d'informations et notamment d'un système d'informations utilisé en micro-informatique.

Le domaine est celui de la sécurité logique qui est un domaine couvrant l'ensemble des techniques et technologies applicables à la protection logique des informations stockées, traitées ou transmises sur un support quelconque.

La réglementation concernant la sécurité des systèmes d'informations impose l'utilisation de ressources cryptographiques, telles que des circuits intégrés dédiés, pour protéger ou chiffrer les informations confidentielles d'un système avec un niveau de protection acceptable au regard des enjeux que la compromission de ces informations entraînerait.

Les ressources de chiffrement qui doivent s'intégrer à un micro-ordinateur font face au problème de l'hétérogénéité des plates-formes et de l'évolution rapide des éléments logiciels. Ceci oblige les utilisateurs de ces ressources de chiffrement à se cantonner à des machines très vite obsolètes.

Dans le cas d'un micro-ordinateur les circuits intégrés de chiffrement sont installés sur des cartes pilotées par micro-processeur, le circuit de chiffrement se comportant alors comme un coprocesseur. Grâce à ces cartes installées sur le bus interne du micro-ordinateur et par l'adjonction de primitives logicielles compatibles avec le système d'exploitation du micro-ordinateur, un certain nombre de services de sécurité tels que l'authentification, le contrôle d'intégrité, la confidentialité, la non répudiation etc.. peuvent être rendus en s'appuyant sur l'utilisation de principes de cryptographie.

Il est actuellement difficile d'intégrer avec souplesse ces cartes dans l'environnement des micro-ordinateurs. En effet, les standards matériels et les standards de systèmes d'exploitation sont très nombreux. Cette variété nécessite de décliner les fonctions de sécurisation sous forme de famille de cartes respectant les différents standards.

Il en ressort un coût élevé en développement et encore plus en maintenance, considérant la vitesse d'évolution des standards en micro-informatique.

Le but de l'invention est de pallier les inconvénients précités.

A cet effet, l'invention a pour objet un dispositif de sécurisation de systèmes d'informations, notamment d'un système d'informations utilisé en micro-informatique comportant au moins un port SCSI, comportant des moyens de chiffrement d'informations confidentielles transitant dans le système, caractérisé en ce qu'il constitue un périphérique, communiquant avec le système d'information par un bus SCSI, comportant une interface entre le bus SCSI et un bus interne au périphérique mettant en communication des moyens de gestion et de stockage d'informations avec les moyens de chiffrement contenus dans le périphérique, ainsi qu'avec une interface entre un utilisateur et le périphérique, permettant de rendre les services de sécurité sur les informations confidentielles transitant dans le périphérique indépendamment des standards de bus et de système d'exploitation utilisés par le système d'informations.

Un des principaux avantages de l'invention permet de rendre les services de sécurité habituels indépendamment des standards de bus et de système d'exploitation. Pour cela l'invention consiste à déporter la ressource de sécurité en dehors du micro-ordinateur et à la présenter comme un périphérique informatique standard vis-à-vis du micro-ordinateur. Dans le cas d'un micro-ordinateur, le port de communication le plus adapté pour connecter le périphérique 1 est le port SCSI, abréviation anglo saxonne pour "Small Computer System Interface", comportant un système d'assignation et d'adressage des différents périphériques qui émulent des systèmes connectés sur un réseau local.

D'autres caractéristiques et avantages de l'invention apparaîtront dans la description qui suit faite en regard des dessins annexés qui représentent :
- la figure 1, un schéma fonctionnel d'un dispositif selon l'invention,
- la figure 2, un premier mode de réalisation d'un dispositif selon l'invention,
- la figure 3, un deuxième mode de réalisation d'un dispositif selon l'invention, et
- la figure 4, un troisième mode de réalisation d'un dispositif selon l'invention.

Le dispositif selon l'invention est utilisable sur tous micro-ordinateurs ou stations de travail possédant un port SCSI. Il est utilisable sur des serveurs de réseaux locaux par des abonnés à ces réseaux. Il peut être également utilisé avec une interface parallèle sur des télécopieurs.

Un autre avantage du dispositif selon l'invention est que l'utilisateur peut, en dehors des heures de service, mettre facilement son périphérique sous clé dans un coffre si son local n'est pas protégé et éviter ainsi la compromission des éléments secrets contenus dans le périphérique.

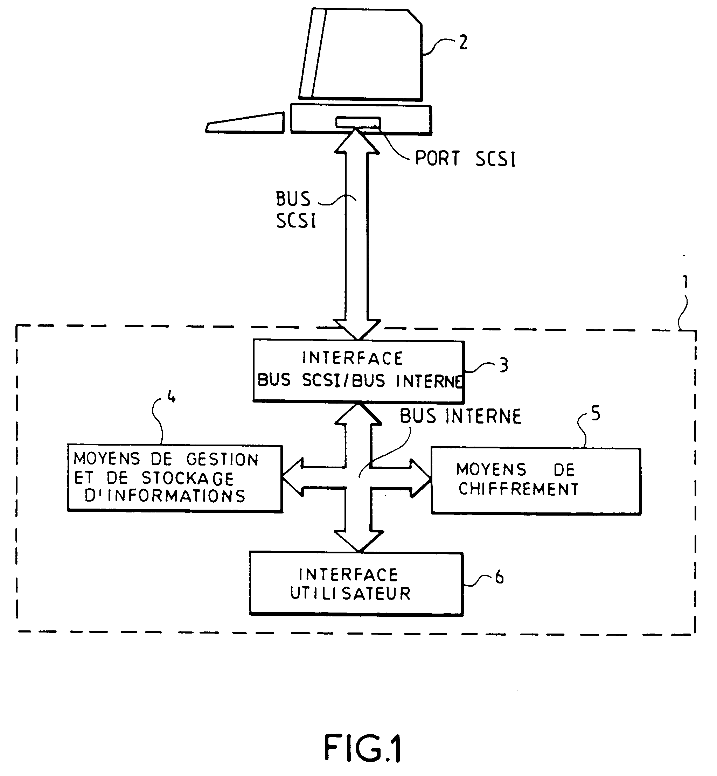

La figure 1 illustre un schéma fonctionnel d'un dispositif selon l'invention.

Le dispositif selon l'invention constitue un périphérique 1 délimité par une ligne fermée discontinue et il est connecté à un micro-ordinateur 2 par une première extrémité d'un bus SCSI bidirectionnel via le port SCSI du micro-ordinateur 2. Le bus SCSI est connecté par son autre extrémité à l'entrée du périphérique 1 selon l'invention par une interface 3 entre le bus SCSI et un bus interne au périphérique 1. Cette interface 3, par exemple un contrôleur, permet la réception des instructions ou directives de commande émanant du micro-ordinateur 2, le lancement de leur exécution et le transfert des informations avec mise en forme du signal reçu sur le bus interne du périphérique 1. Le bus interne met en communication des moyens de gestion et de stockage d'informations 4 avec des moyens de chiffrement 5 des informations confidentielles et avec une interface 6 entre un utilisateur et le périphérique 1 permettant entre autre de rentrer un code confidentiel pour l'accès au périphérique.

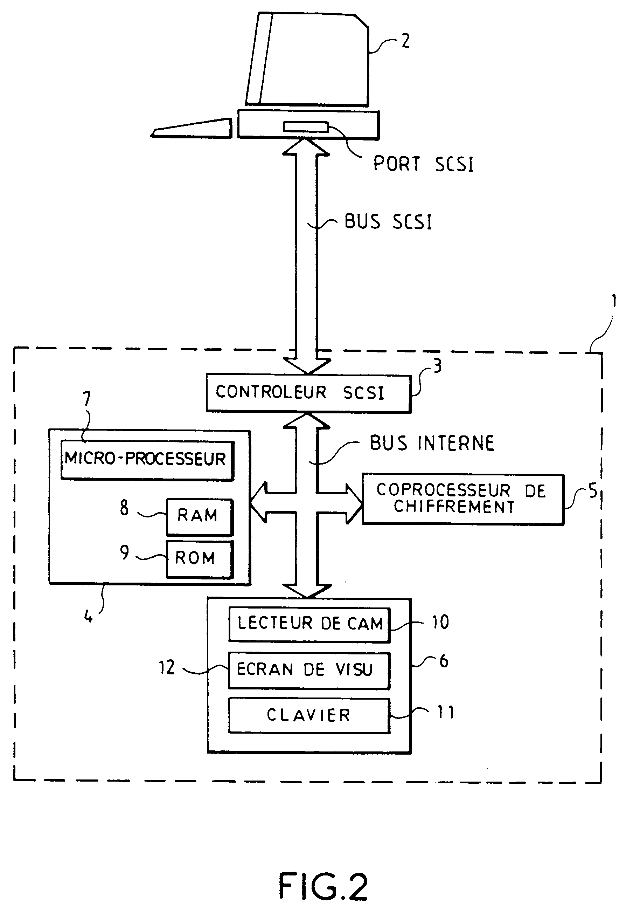

La figure 2, illustre un premier mode de réalisation d'un périphérique selon l'invention basé sur le schéma fonctionnel de la figure 1. Sur les figures suivantes les éléments homologues à ceux de la figure 1 sont désignés par le même repère.

L'interface 3 entre le bus SCSI et le bus interne du périphérique est réalisée par un contrôleur SCSI regroupant les fonctions précédemment décrites. Les moyens de gestion et de stockage d'informations 4 comportent un micro-processeur 7, une mémoire vive 8, RAM pour l'utilisation et la sauvegarde temporaire des informations, une mémoire morte 9, ROM, programmable contenant l'application de gestion des informations en entrée et en sortie du micro-processeur 7 ainsi que les informations issues de l'interface utilisateur 6. Les moyens de chiffrement 5 sont réalisés par l'intermédiaire d'un circuit de chiffrement, par exemple un coprocesseur dédié à la fonction de chiffrement. L'interface 6 entre l'utilisateur et le périphérique 1 comporte un lecteur 10 de cartes à mémoire contenant par exemple une ou plusieurs clés secrètes permettant l'accès au périphérique 1 et au coprocesseur 6 de chiffrement. Elle comporte également un clavier 11 simplifié, par exemple de dix touches, permettant l'introduction d'un code correspondant au code porteur de la carte pour le contrôle d'accès au périphérique 1, et un écran de visualisation 12, LCD par exemple. En cas de succès de ce contrôle, l'activation du périphérique 1 est alors effectuée et l'utilisation se fait ensuite très classiquement comme n'importe quel périphérique SCSI standard.

Le boîtier renfermant le périphérique 1 selon l'invention peut être blindé pour des besoins de durcissement notamment en ce qui concerne la norme tempest.

Le périphérique de chiffrement 1, tel que représenté à la figure 2, est vu par le micro-ordinateur 2 comme un périphérique standard identifié par un numéro d'unité logique déterminé.

Le périphérique 1 selon l'invention permet ainsi d'éviter une implémentation logicielle relative au chiffrement à l'intérieur du micro-ordinateur 2. Le chiffrement se fait donc sans modification du système d'exploitation du micro-ordinateur 2.

Une application du périphérique 1 selon l'invention peut consister par exemple en un chiffrement d'un fichier transmis du micro-ordinateur 2 vers le périphérique de chiffrement 1 par l'intermédiaire du bus SCSI. Le bus étant bidirectionnel, il transmet des informations en clair au périphérique 1 qui après traitement les réintroduit dans le micro-ordinateur 2 sous la forme d'informations chiffrées. Les informations chiffrées pouvant être ensuite stockées sur un support magnétique tel qu'un disque ou une bande magnétique. Inversement, des informations confidentielles chiffrées sur un disque ou une bande magnétique ne sont exploitables par le micro-ordinateur 2 qu'après déchiffrement par le périphérique 1.

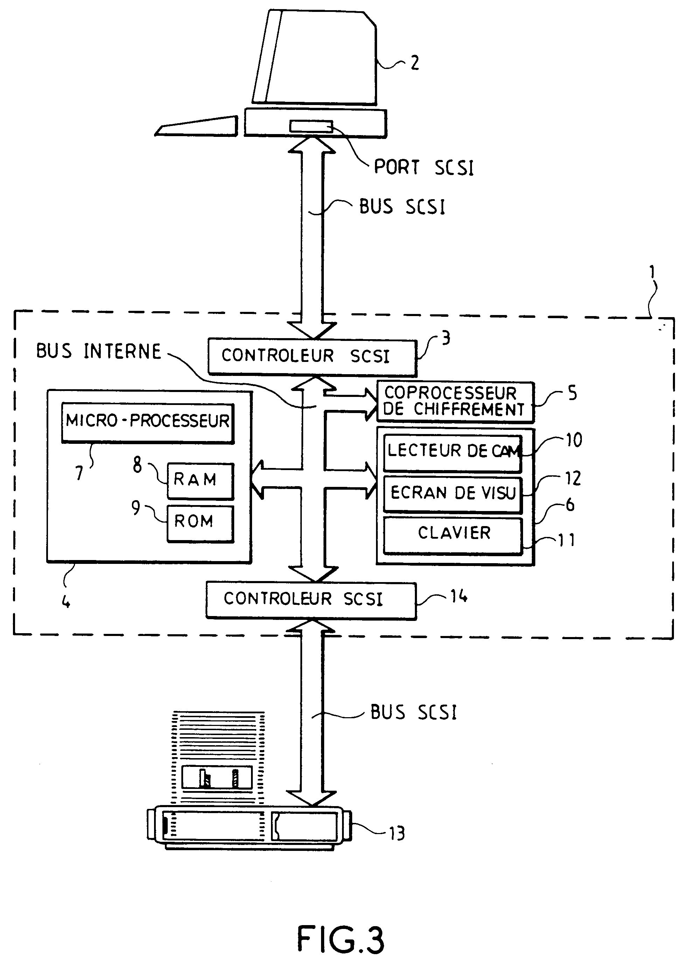

La figure 3 illustre un deuxième mode de réalisation d'un périphérique 1 selon l'invention placé "en coupure" sur le bus SCSI entre le micro-ordinateur 2 et un autre périphérique SCSI 13, par exemple un scanner, une imprimante ou tous autres périphériques SCSI. Il comporte en sortie un deuxième contrôleur SCSI 14 assurant l'interface entre le bus interne du périphérique 1 selon l'invention et le bus SCSI reliant le périphérique SCSI 13 au périphérique 1 selon l'invention. Le périphérique 1 selon l'invention se comporte alors comme un connecteur de chiffrement.

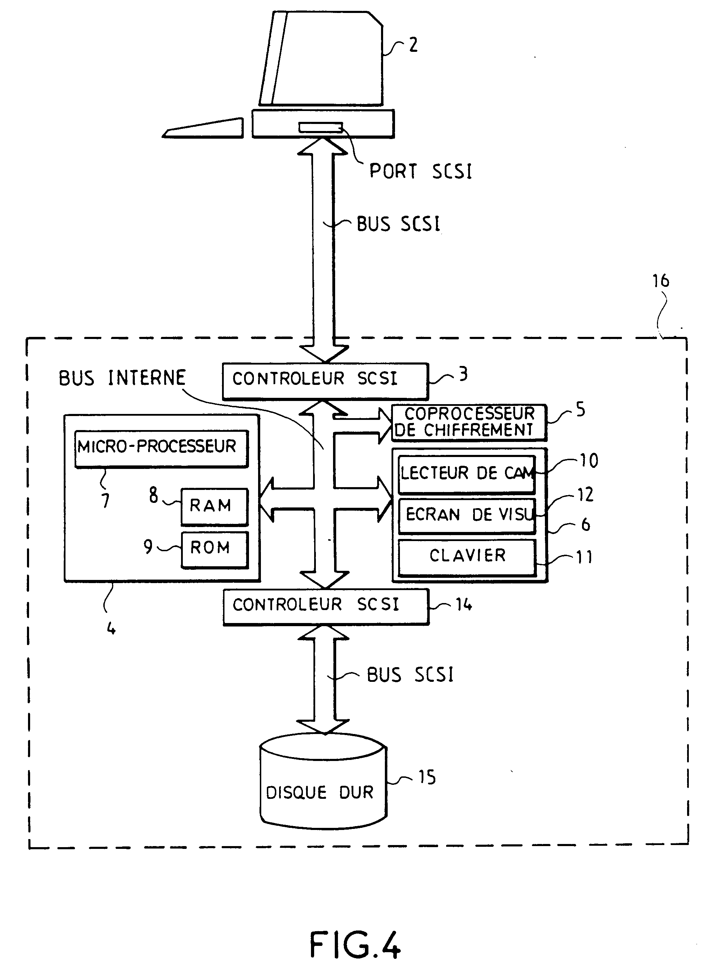

La figure 4 illustre un troisième mode de réalisation d'un périphérique selon l'invention utilisé en tant que disque dur de chiffrement comportant par exemple toutes les informations confidentielles stockées sous forme chiffrées. Sur cette figure les éléments homologues à la figure 3 sont désignés par les mêmes repères.

Comme pour le deuxième mode de réalisation d'un dispositif selon l'invention, illustré à la figure 3, le périphérique 1 comporte le deuxième contrôleur SCSI 14 couplé à un disque dur standard 15 par l'intermédiaire d'un bus SCSI ou tout autre interface vers un disque dur.

Le périphérique 1 associé au disque dur 15 peut être considéré comme un nouveau périphérique 16 délimité par une ligne fermée discontinue et il peut être considéré par le micro-ordinateur 2 comme deux unités logiques distinctes : une première unité logique utilisant le disque dur 15 comme une mémoire de données chiffrées et une deuxième unité logique utilisant le disque dur 15 comme une mémoire de données en clair. A partir du micro-ordinateur 2, il suffit de choisir le numéro d'unité logique correspondant à l'une des deux fonctions pour obtenir respectivement des données stockées en clair ou des données stockées chiffrées organisées par exemple sous forme de fichiers.

Dans les différentes applications décrites précédemment le périphérique 1, 16 permet en outre le contrôle de l'intégrité des informations confidentielles échangées entre le périphérique 1, 16 et le micro-ordinateur 2 ainsi que l'authentification de l'utilisateur.

## Revendications

1. Dispositif de sécurisation de systèmes d'informations, notamment d'un système d'informations (2) utilisé en micro-informatique comportant au moins un port SCSI, comportant des moyens (5) de chiffrement d'informations confidentielles transitant dans le système, caractérisé en ce qu'il constitue un périphérique (1), communiquant avec le système d'information (2) par un bus SCSI, comportant une interface (3) entre le bus SCSI et un bus interne au périphérique (1) mettant en communication des moyens de gestion et de stockage d'informations (4) avec les moyens (5) de chiffrement contenus dans le périphérique (1), ainsi qu'avec une interface (6) entre un utilisateur et le périphérique (1), permettant de rendre les services de sécurité sur les informations confidentielles transitant dans le périphérique (1) indépendamment des standards de bus et de système d'exploitation utilisés par le système d'informations (2).

2. Dispositif selon la revendication 1, caractérisé en ce que l'interface (3) entre le bus SCSI et le bus interne est constituée d'un contrôleur SCSI, en ce que les moyens de chiffrement (5) comportent un coprocesseur dédié de chiffrement, en ce que les moyens de gestion et de stockage d'informations (4) comportent un micro-processeur (7) associé à un bloc mémoire (8 et 9), et en ce que l'interface (6) entre l'utilisateur et le périphérique (1) comporte un lecteur (10) de cartes à mémoire comportant au moins une clé secrète, un écran de visualisation (12), et un clavier( 11) permettant de contrôler le code d'accès de la carte.

3. Dispositif selon l'une quelconque des revendications 1 et 2, caractérisé en ce qu'il comporte en outre un deuxième contrôleur SCSI (14) permettant de coupler au bus interne du périphérique (1) au moins un périphérique SCSI (13) par l'intermédiaire d'un bus SCSI, le dispositif se comportant alors comme un connecteur de chiffrement.

4. Dispositif selon l'une quelconque des revendications 1 et 2, caractérisé en ce qu'il comporte en outre un deuxième contrôleur SCSI (14) permettant de coupler au bus interne du périphérique (1) au moins un disque dur (15) par l'intermédiaire d'un bus SCSI, le dispositif se comportant comme un disque dur de chiffrement.
